# EUROPEAN PATENT APPLICATION

(11) **EP 1 137 293 A2**
(43) Date of publication of application: **26.09.2001**
(21) Application number: 01106345.0
(22) Date of filing: 16.03.2001
(51) Int. Cl.: H04N 13/00

(54) **Stereoscopic image projection device**

(30) Priority: 21.03.2000 JP 2000078744; 17.01.2001 JP 2001009308
(71) Applicant: Olympus Optical Co., Ltd., Tokyo (JP)
(72) Inventor: Nakamura, Tomoyuki, Hachioji-shi, Tokyo (JP); Komiya, Yasuhiro, Hino-shi, Tokyo (JP)
(74) Representative: Käck, Jürgen

(57) **Abstract**

Images for adjustment are projected onto an image display section 12 by image projecting sections 11-1, 11-2 for a left eye and a right eye. The image projecting sections 11-1, 11-2 are disposed such that projected image display ranges for the left eye and the right eye are substantially superposed. First, image projection at the image projecting section 11-2, which is one of the image projecting sections for the left eye and the right eye, is stopped, and one image for adjustment which is projected onto the image display section 12 is picked-up by a pick-up section 13 for correction. Next, image projection by the image projecting section 11-2, at which projection had been stopped until then, is started, and a new image for adjustment projected on the image display section 12 is picked-up by the pick-up section 13 for correction. After pick-up has been completed, obtained image data is sent to a correction computation section 14 where, on the basis of the image data, computation is carried out to generate correction data for geometric distortion and positional offset. The correction data is sent to a correction processing section 15 where, on the basis of the correction data, correction processing is carried out on left and right inputted image signals.

## Description

### BACKGROUND OF THE INVENTION

### Field of the Invention

The present invention relates to a stereoscopic image projection device which can correct image distortion when an image for one eye and an image for another eye are projected from a plurality of projecting devices, and to a correction amount computing device of the stereoscopic image projection device.

### Description of the Related Art

Generally, in order to view a stereoscopic image having binocular parallax, the left and right images which are projected for the stereoscopic image must be separated by filters and provided to the respective eyes . Or, left and right images having parallax must be alternately switched time-wise by shutters and provided to the respective eyes.

As a method of viewing by separating into left and right images by filters, the following three-dimensional display system is disclosed in "Basics of Three-Dimensional Projected Images" (Ohmsha, NHK Broadcasting Technical Laboratory Edition), pages 139-144. In this three-dimensional display system, by using projectors for a left eye and a right eye, images for a left eye and a right eye are passed through polarizing filters having different polarization directions and are projected on a screen in a superposed manner. By passing the images through polarizing filters for the left eye and the right eye, and by the image for the left eye being viewed by the left eye and the image for the right eye being viewed by the right eye, stereoscopic viewing is possible.

As a method of viewing by switching alternately between left and right images over time by using shutters, Japanese Patent Application National Publication No. 11-503533 discloses a method in which time-divided shutters are used in place of the aforementioned polarizing filters. In this method, a left eye image and a right eye image are displayed alternately from projectors. Synchronously with the display timing, a shutter for the left eye is opened and a shutter for the right eye is closed at the time of displaying the left eye image, and the shutter for the right eye is opened and the shutter for the left eye is closed at the time of displaying the right eye image. By these operations, the left eye image is viewed by the left eye, and the right eye image is viewed by the right eye.

In a method which utilizes plural projectors and projects the left eye image and the right eye image from different projectors, there is parallax in the images projected from the projectors. Even if the image display ranges of the both projectors are made to coincide accurately, the same image will be displayed in a somewhat offset manner. In this state, if the left eye image and the right eye image are made to enter into the left eye and the right eye respectively, a correct three-dimensional image can be seen. However, if the image display regions of the both projectors are offset, the amount of offset of the single image is such that there is the offset of the display positions in addition to the offset due to the parallax. Even if the respective images are made to enter the left eye and the right eye, a correct three-dimensional image cannot be viewed.

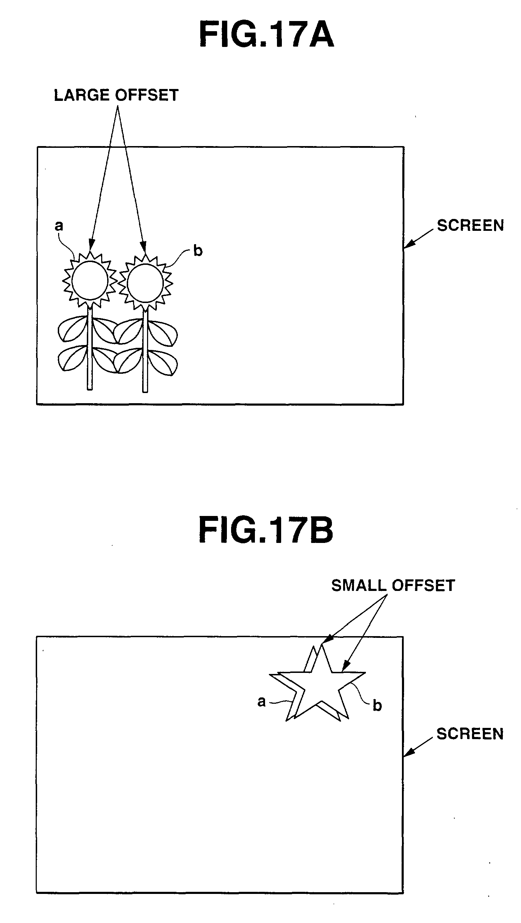

Fig. 17A illustrates a case in which the positional offset is large between a left eye image a and a right eye image b which are displayed on a screen, the positional offset being caused by the parallax offset between the projector for the left eye and the projector for the right eye. Fig. 17B illustrates a case in which such positional offset is small. Fig. 17A illustrates a case in which the offset is large and Fig. 17B illustrates a case in which the offset is small. In addition to the parallax offset, there is also the offset in the display positions. Thus, the display ranges of the respective projectors must be accurately superposed. However, in a case in which plural images projected from plural projectors are superposed on a screen, minute aligning is necessary, and much time and work are required.

Further, because the projector itself has a certain size, in order to superpose the image display regions, the projecting direction must be set at an incline with respect to the screen. As a result, it has not been possible to avoid the distortion in which the display range, which should be rectangular, is trapezoidal.

### OBJECT(S) AND SUMMARY OF THE INVENTION

An object of the present invention is to provide a stereoscopic image projection device in which there is no need for fine positional adjustment and in which distortion of an image can be eliminated, and to provide a correction amount computing device of the stereoscopic image projection device.

A stereoscopic image projection device in accordance with a first invention comprises: a plurality of image projecting means which, on the basis of image signals for one eye and another eye, project images for the one eye and the other eye which have parallax; image display means for displaying the images projected from the plurality of image projecting means; viewing means for dividing and enabling viewing, at the one eye and at the other eye respectively, of two-dimensional images for the one eye and the other eye which are displayed on the image display means; and correction processing means for carrying out correction processing on at least one of image signals for the one eye and the other eye, on the basis of an amount of correction of image distortion determined on the basis of the image displayed on the image display means.

A correction amount computing device of a stereoscopic image projection device in accordance with a second invention has a plurality of image projecting means which, on the basis of image signals for one eye and another eye, project images for the one eye and the other eye which have parallax; image display means for displaying the images projected from the plurality of image projecting means; viewing means for dividing and enabling viewing, at the one eye and at the other eye respectively, two-dimensional images for the one eye and the other eye which are displayed on the image display means; and correction processing means for carrying out correction processing on at least one of image signals for the one eye and the other eye, on the basis of an amount of correction of image distortion determined on the basis of the image displayed on the image display means, wherein the correction amount computing device of a stereoscopic image projection device comprises: pick-up means for correction for picking-up an image projected on the image display means, for correction; and correction computing means for computing a correction amount for correcting image distortion from picked-up image data, and outputting the correction amount to the correction processing means.

### BRIEF DESCRIPTION OF THE DRAWINGS

Fig. 1 is diagram schematically showing a structure of a stereoscopic image projection device of a first embodiment of the present invention.

Fig. 2 is a diagram showing an arrangement of two projectors.

Figs. 3A, 3B and 3C are diagrams showing distortion arising due to the arrangement of the projectors, and a method of correcting the distortion.

Fig. 4 is a diagram showing a method of obtaining superposed images in which there is no positional offset, in a case in which there is positional offset.

Fig. 5 is a diagram schematically showing a structure of a stereoscopic image projection device of a second embodiment of the present invention.

Fig. 6 is a diagram showing a structural example of a pick-up section for correction in the second embodiment of Fig. 5.

Fig. 7 is a diagram schematically showing a structure of a stereoscopic image projection device of a third embodiment of the present invention.

Fig. 8 is diagram showing a structural example of a pick-up section for correction in the third embodiment of Fig. 7.

Fig. 9 is a perspective view of a structural example of a stereoscopic image projection device using four projectors.

Fig. 10 is a diagram for explaining an example of a method for correcting non-uniformity of luminance.

Fig. 11 is a block diagram showing a structural example of an image viewing section having an automatic focal point adjusting function.

Fig. 12 is a diagram for explaining a convergence-angle in Fig. 11.

Fig. 13 is a diagram schematically showing a structure of a stereoscopic image projection device of a fourth embodiment of the present invention.

Figs. 14A, 14B, 14C, 14D are diagrams showing projection regions in cases in which images are projected individually onto a screen from the respective projectors in the fourth embodiment of Fig. 13.

Fig. 15 is a six primary color spectral distribution graph comparatively showing wavelength bands covering six primary colors which are the primary colors of R1, G1, B1 and the primary colors of R2, G2, B2, and wavelength bands of the three primary colors of RGB before filters are attached, in the fourth embodiment of Fig. 13.

Fig. 16 is a chromaticity diagram showing, in comparison with conventional art, a color reproduction range obtained by six primary color display in the fourth embodiment of Fig. 13.

Figs. 17A and 17B are diagrams for explaining large and small positional offset between an image for a left eye and an image for a right eye which are projected on a screen.

### DETAILED DESCRIPTION OF THE PREFERRED EMBODIMENTS

Embodiments of the present invention will be described hereinafter with reference to the drawings.

### [First Embodiment]

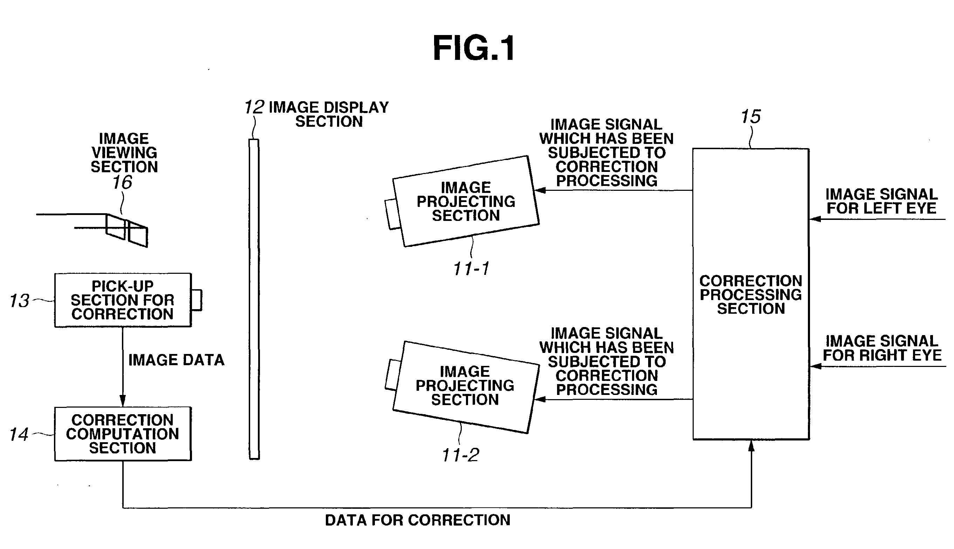

Fig. 1 is diagram schematically showing a structure of a stereoscopic image projection device of a first embodiment of the present invention.

The stereoscopic image projection device of the present embodiment is structured to include a plurality of image projecting sections 11-1, 11-2, an image display section 12, a pick-up section 13 for correction, a correction computation section 14, a correction processing section 15, and an image viewing section 16.

The plurality of image projecting sections 11-1, 11-2 are formed by projectors or the like for projecting projected images for the left eye and the right eye. On the basis of image signals for the left eye and the right eye, images for the left eye and the right eye which have parallax are projected.

The image display section 12 is formed by a screen or the like, and displays the images projected from the plurality of image projecting sections 11-1, 11-2 such that the images are substantially superposed on the screen.

The image pick-up section 13 for correction is formed by a digital camera or the like, and picks up the images which have been projected on the image display section 12 in order to correct geometric distortion and positional offset in the projected images.

The correction computation section 14 determines, by computation, a correction amount of the distortion of the image from the image data picked-up by the pick-up section 13 for correction.

The correction processing section 15 carries out correction processing of the image signals for the left eye and the right eye or either one of these image signals, on the basis of the correction amount determined as the results of computation at the correction computation section 14. The correction processing section 15 supplies the correction processed image signals to the plural image projecting sections 11-1, 11-2.

The viewing means 16 is formed by spectacles or the like, and divides the two-dimensional images for the left eye and the right eye which are displayed on the image display section 12, so as to enable the images to be viewed by the left eye and the right eye respectively.

Next, operation and effects of the present first embodiment will be described.

First, images for adjustment are projected onto the image display section 12 by the image projecting sections 11-1, 11-2 for the left eye and the right eye. The image projecting sections 11-1, 11-2 are disposed such that the projected image display ranges for the left eye and the right eye are substantially superposed. Next, image projection at one of the image projecting sections for the left eye and the right eye, for example, the image projecting section 11-2, is stopped. The one image for adjustment which is projected onto the image display section 12 is picked-up by the pick-up section 13 for correction. When pick-up is finished, the image projection by the image projecting section 11-1, which has been displaying an image until then, is stopped, and image projection by the image projecting section 11-2 at which projecting had been stopped until then is started. The image for adjustment which is newly projected on the image display section 12 is picked-up by the pick-up section 13 for correction.

After pick-up has been completed, the image data obtained by pick-up is sent to the correction computation section 14. Here, computation based on the image data is carried out, and correction data for geometric distortion and positional offset is generated. The correction data is sent to the correction processing section 15 where, on the basis of the correction data, correction processing is carried out on the left and right image signals inputted from a signal source (not shown). The image signals which have been subjected to correction processing are sent to the image projecting sections 11-1, 11-2, and images, whose geometric distortion and positional offset have been corrected, are displayed on the image display section 12.

In a case in which it is known in advance that there is hardly any geometric distortion or positional offset, with respect to the target position on the image display section 12, of the image projected from one of the image projecting sections 11-1, 11-2, it is possible to carry out correction processing for only the image signal of the image projected from the other image projecting section.

Due to the above-described method, the positional offset and geometric distortion of a plurality of images which are superposed in order to obtain a stereoscopic image can be electrically corrected without mechanical fine adjustment. As a result, a stereoscopic image without geometric distortion and positional offset on the image display section 12 can be viewed by the image viewing section 16.

Next, correction of positional offset and correction of distortion will be explained.

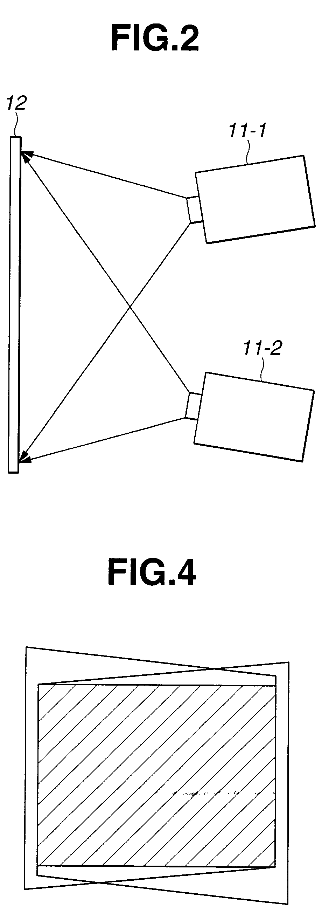

In a case in which the left eye image and the right eye image having the parallax information are projected onto the screen 12, which is the image display section, by using the two projectors 11-1, 11-2 which are the image projecting sections, and the two images are superposed, usually, it is necessary to dispose the projectors 11-1, 11-2 in an inclined arrangement as illustrated in Fig. 2. This is because the projectors themselves have a certain size.

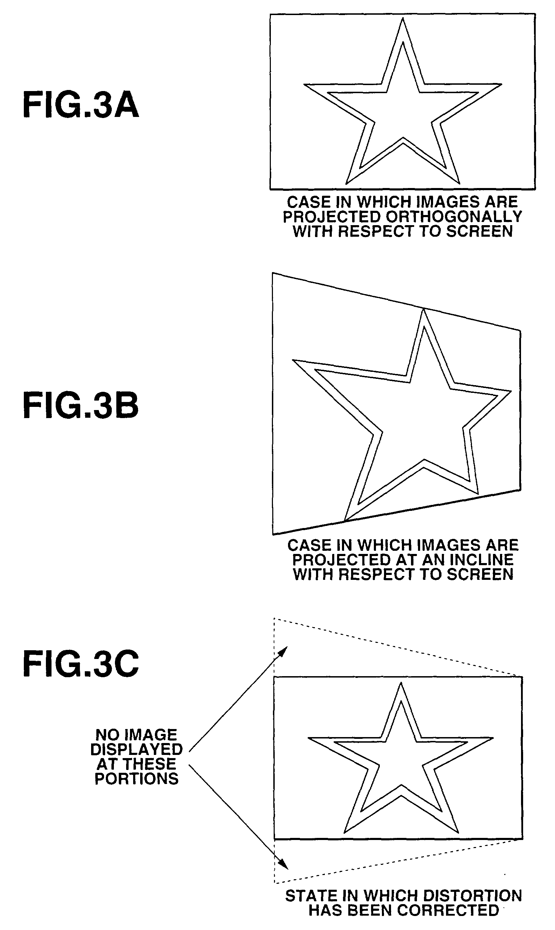

In a case in which the projectors are arranged as illustrated in Fig. 2, because the projecting directions are not orthogonal with respect to the screen 12, the image display regions of the projectors 11-1, 11-2 are distorted in trapezoidal shapes, as illustrated in Fig. 3B for example. In Fig. 3B, as compared to Fig. 3A which shows the original images, the left sides of the images are large and the right sides are small. In order to correct this configurational distortion, the distorted images are picked-up by the pick-up section 13, and a distortion amount is determined by computation at the correction computation section 14 from the picked-up image data. At the correction processing section 15, the distortion is eliminated by electrically applying a correction for eliminating the distortion to the image signals . The state after correction is applied is illustrated in Fig. 3C. Namely, the state in Fig. 3C is a state in which, in order to eliminate the orthogonal screen amplitude, which gradually increases from the right side in the orthogonal direction to the left side and which is caused by the trapezoidal distortion of Fig. 3B, orthogonal amplitude correction is applied such that the compression amount of the orthogonal amplitude is a maximum at the left side and the compression amount is gradually reduced so that the compression amount at the right side is substantially zero.

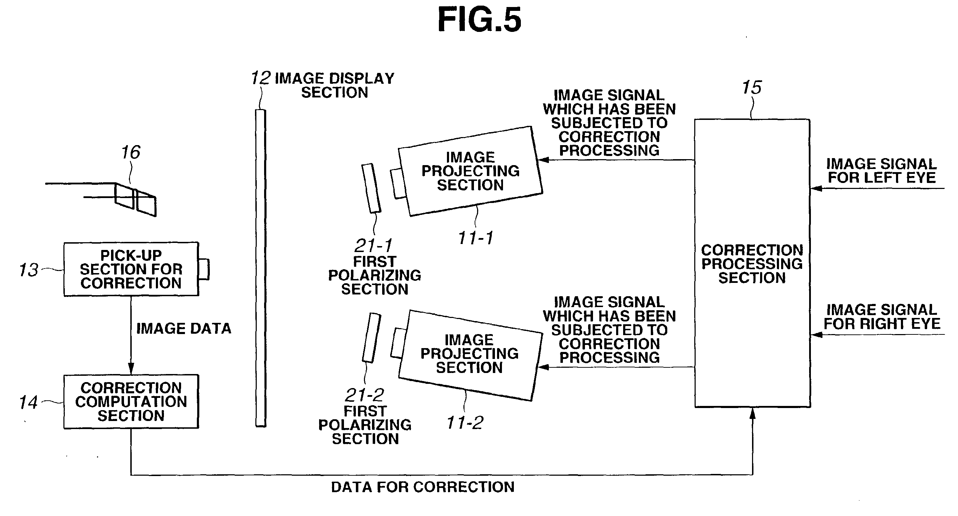

Arranging and adjusting the two projectors 11-1, 11-2 such that the two images are superposed correctly requires much time and labor. Further, even if the projectors are disposed correctly at first, if, for some reason, the arrangement thereof deviates even slightly, there is the need to adjust the positions thereof again. In a case in which parallax images are projected by using the two projectors, when there is positional offset, the parallax information cannot be correctly received at the viewing section 16, and an unnatural three-dimensional image is viewed. Namely, when there is positional offset, a proper stereoscopic effect cannot be achieved. Thus, as illustrated in Fig. 4, even if the image display regions do not coincide correctly and there is slight offset, if only the hatched portions in Fig. 4 are used, images which are superposed without positional offset can be obtained. Or, as shown in Fig. 1, even in a state in which there generally is positional offset, the positional offset can be eliminated by picking-up the images at the pick-up section 13, determining the amount of positional offset at the correction computation section 14 from the picked-up image data, and applying correction electrically to the image signals at the correction processing section 15.

Note that each of the structures of the embodiments of the present invention can of course be varied and modified in various ways. For example, the image display section 12 may be transmissive and the images viewed from the side opposite the side at which the projectors 11-1, 11-2 are positioned (a rear type structure such as that of Fig. 1). Or, the image display section 12 may be reflective and the images viewed from the same side as the projectors (a front type structure). Further, the correction computation section 14 may carry out computation of correction data for only the positional offset, or may carry out computation of correction data for only the geometric distortion.

### [Second Embodiment]

Fig. 5 is a diagram schematically showing the structure of the stereoscopic image projection device of the second embodiment of the present invention. In the present embodiment, the image for the left eye and the image for the right eye are projected onto the image display section 12 such as a screen or the like by using polarizing means (e.g., polarizing filters).

The stereoscopic image projection device of the present embodiment is structured to include the plurality of image projecting sections 11-1, 11-2, the image display section 12, the pick-up section 13 for correction, the correction computation section 14, the correction processing section 15, the image viewing section 16, and a plurality of first polarizing sections 21-1, 21-2 which are provided to correspond to the plurality of image projecting sections 11-1, 11-2.

The structures of the plurality of image projecting sections 11-1, 11-2 such as a plurality of projectors or the like, the image display section 12 such as a screen or the like, the pick-up section 13 for correction such as a digital camera or the like, the correction computation section 14, the correction processing section 15, and the image viewing section 16 such as spectacles or the like are the same as in Fig. 1.

The polarization directions of the first polarizing section 21-1, which is disposed in front of the projector 11-1 for the left eye, and the first polarizing section 21-2, which is disposed in front of the projector 11-2 for the right eye, are offset by a predetermined angle of, for example, 90° or the like.

Next, the operation and effects of the present second embodiment will be described.

First, images for adjustment are projected from the image projecting sections 11-1, 11-2 for the left and right eye so as to pass through the respective polarizing sections of the plurality of first polarizing sections 21-1, 21-2 and be projected onto the image display section 12. The image projecting sections 11-1, 11-2 are disposed such that the image display ranges for the left eye and the right eye are substantially superposed on each other. Thereafter, the operations are the same as those of the first embodiment.

Next, image projection at one of the image projecting sections 11-1, 11-2 for the left eye and the right eye, for example, the image projecting section 11-1, is stopped. The one image for adjustment which is projected onto the image display section 12 is picked-up by the pick-up section 13 for correction. When pick-up is finished, the image projection by the image projecting section 11-2, whose image has been displayed until then, is stopped, and image projection by the image projecting section 11-1 whose projecting had been stopped until then is started. The image for adjustment which is newly projected on the image display section 12 is picked-up by the pick-up section 13 for correction.

After pick-up has been completed, the image data obtained by pick-up is set to the correction computation section 14. Here, computation based on the image data is carried out, and correction data for geometric distortion and positional offset is generated. The correction data is sent to the correction processing section 15 where, on the basis of this data, correction processing is carried out on the left and right image signals (or on one of the image signals) inputted from a signal source (not shown). The image signals which have been subjected to correction processing are sent to the image projecting sections 11-1, 11-2, and images, whose geometric distortion and positional offset have been corrected, are displayed on the image display section 12.

By making the polarization directions of the first polarizing sections 21-1, 21-2 for the left eye and the right eye coincide, the two-dimensional images for the left eye and the right eye which are displayed on the image display section 12 can be divided and viewed respectively by the left eye and the right eye at the left eye portion and the right eye portion of the image viewing section 16.

In accordance with the above method, the geometric distortion and positional offset of the plurality of images which are superposed in order to obtain a stereoscopic image can be corrected electrically without mechanical fine adjustment. As a result, a stereoscopic image without geometric distortion and positional offset on the image display section 12 can be viewed by the image viewing section 16.

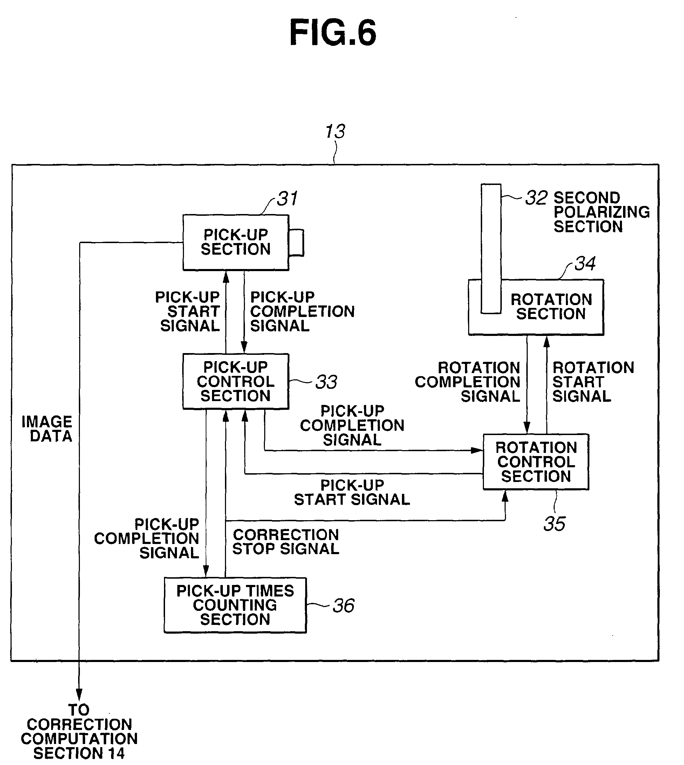

Fig. 6 shows a structural example of the pick-up section 13 for correction in the above-described second embodiment.

The pick-up section 13 for correction is structured so as to include a pick-up section 31, a second polarizing section 32, a pick-up control section 33, a rotating section 34, a rotation control section 35, and a pick-up times counting section 36.

The pick-up section 31 carries out pick-up of an image for correction, and temporarily accumulates the image data. The pick-up control section 33 controls the pick-up section 31.

Only light of a given polarization direction passes through the second polarizing section 32. The polarization direction of the second polarizing section 32 can be rotated by a predetermined angle, e.g., 90°, by the rotating section 34. In the step of obtaining image data for correction, the rotating section control section 35 controls the rotating section 34, and sets the polarizing angle of the second polarizing section 32. Namely, the polarizing angle of the second polarizing section 32 can be set to an angle which is equivalent to the polarizing angles of the plural first polarizing sections 21-1, 21-2.

The pick-up times counting section 36 senses completion of pick-up of the image for correction, and counts the number of times that pick-up takes place. When the number of times that pick-up is carried out reaches a given number, acquisition of data for correction is completed, and pick-up operation of the pick-up section 31 is stopped.

The operation and effects of the second embodiment employing the structure of Fig. 6 will be explained.

First, images for adjustment are projected from the image projecting sections 11-1, 11-2 for the left and right eye so as to pass through the respective polarizing sections of the plurality of first polarizing sections 21-1, 21-2 and be projected onto the image display section 12. The image projecting sections 11-1, 11-2 are disposed such that the image display ranges for the left eye and the right eye are substantially superposed on each other. The polarization direction of the second polarizing section 32 is made to coincide with the polarization direction of the first polarizing section of one of the image projecting sections 11-1, 11-2 for the left eye and right eye, e.g., with the polarization direction of the first polarizing section 21-1 of the image projecting section 11-1. In this state, an image for adjustment is projected onto the image display section 12.

Then, the projected image for correction is picked-up at the pick-up section 31 of the pick-up section 13 for correction. When projection has been completed, a signal giving notice that projection has been completed is generated at the pick-up section 31, and this signal is sent to the pick-up control section 33, and is sent from the pick-up control section 33 to the rotation control section 35 and the pick-up times counting section 36. At the pick-up times counting section 36, the pick-up times value is incremented by 1. At the rotation control section 35 which senses completion of pick-up, a rotation start signal is sent to the rotating section 34 such that the second polarizing section 32 is rotated 90°. When rotation is completed, a signal giving notice that rotation has been completed is generated from the rotating section 34 and is sent to the rotation control section 35. At the rotation control section 35, a pick-up start signal is generated and sent to the pick-up control section 33. The pick-up control section 33 which has received the pick-up start signal sends this signal to the pick-up section 31, and the image for correction which had not been picked-up previously is picked-up. After pick-up has been completed, a signal notifying that pick-up has been completed is generated from the pick-up section 31 and sent to the pick-up control section 33. The signal is sent to the rotation control section 35 and to the pick-up times counting section 36. Here, the pick-up times value is incremented by 1. If the pick-up times value has reached a value set in advance, a correction stop signal is generated at the pick-up times counting section 36. This correction stop signal is sent to the pick-up control section 33 and to the rotation control section 35, and pick-up and rotation of the second polarizing section 32 are stopped. If the pick-up times value has not reached the pre-set number of pick-up times, the series of processes, from the process after arrangement of the image projecting sections 11-1, 11-2, is repeated until the pick-up times value reaches the pre-set number of pick-up times.

After pick-up has been completed, the picked-up image data is sent to the correction computation section 14. Here, computation based on the image data is carried out, and correction data for geometric distortion and positional offset is generated. The correction data is sent to the correction processing section 15 where, on the basis of this correction data, correction processing is carried out on the image signals for the left eye and the right eye from a signal source. The image signals for the both eyes which have been subjected to processing are sent to the image projecting sections 11-1, 11-2, and images, whose geometric distortion and positional offset have been corrected, are displayed on the image display section 12.

In accordance with the above method, the positional offset and geometric distortion of the plurality of images which are superposed in order to obtain a stereoscopic image can be corrected electrically and automatically without mechanical fine adjustment. As a result, a stereoscopic image without positional offset and geometric distortion on the image display section 12 can be viewed by the image viewing section 16.

### [Third Embodiment]

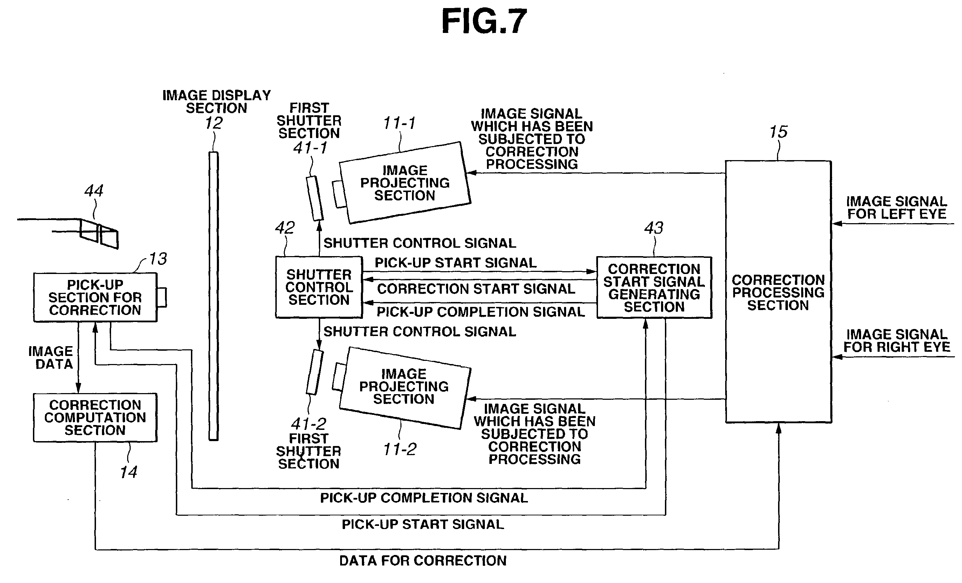

Fig. 7 is a diagram schematically showing the structure of a stereoscopic image projection device of the third embodiment of the present invention. In the present embodiment, the image for the left eye and the image for the right eye are projected onto the image display section 12 such as a screen or the like by using shutter means (e.g., liquid crystal shutters).

The stereoscopic image projection device of the present embodiment is structured to include the plurality of image projecting sections 11-1, 11-2, the image display section 12, the pick-up section 13 for correction, the correction computation section 14, the correction processing section 15, an image viewing section 44, a plurality of first shutter sections 41-1, 41-2 which are provided to correspond to the plurality of image projecting sections 11-1, 11-2, a shutter control section 42, and a correction start signal generating section 43.

The plurality of image projecting sections 11-1, 11-2 are formed by, for example, projectors for the left eye and the right eye. On the basis of an image signal for each eyewhich is supplied from a signal source (not shown), the plurality of image projecting sections 11-1, 11-2 project images for the left eye and the right eye which have parallax.

The plurality of first shutter sections 41-1, 41-2 repeats, at high speed, the operations of permitting passage of and blocking passage of the image lights for the left eye and the right eye which are projected from the plurality of image projecting sections 11-1, 11-2, and project the images onto the image display section 12.

The first shutter section 41-1 disposed in front of the projector 11-1 for the left eye and the first shutter section 41-2 disposed in front of the projector 11-2 for the right eye are alternately turned on and off.

The image display section 12 is a screen for displaying the images projected from the plurality of image projecting sections 11-1, 11-2.

The image viewing means 44 is a structure such as spectacles which divides the two-dimensional images for the left eye and the right eye which are displayed on the image display section 12, so as to enable the images to be viewed by the left eye and the right eye respectively.

The image pick-up section 13 for correction picks up the images which have been projected on the image display section 12 in order to correct geometric distortion and positional offset and the like.

The correction computation section 14 determines, by computation, a correction amount of the distortion of the image from the image data picked-up by the pick-up section 13 for correction.

The correction processing section 15 carries out correction processing of the image signals for the left eye and the right eye (or one image signal), on the basis of the correction amount determined as the results of computation at the correction computation section 14.

The shutter control section 42 controls operations of the plurality of first shutter sections 41-1, 41-2 and the pick-up section 13 for correction.

The correction start signal generating section 43 generates a correction start signal, and makes the shutter control section 42 and the pick-up section 13 for correction start operations for correction.

Next, the operation and effects of the third embodiment will be explained.

First, images for adjustment are projected onto the image display section 12 by the image projecting sections 11-1, 11-2 for the left eye and the right eye, and the image projecting sections 11-1, 11-2 are disposed such that the images for the left eye and the right eye are substantially superposed on each other. By turning the switch provided at the correction start signal generating section 43 on, a correction start signal is generated, and the correction start signal is sent to the shutter control section 42. When the correction start signal is received at the shutter control section 42, the shutter section for the left eye or for the right eye among the plurality of first shutter sections 41-1, 41-2 is closed (e.g., the shutter section 41-2 is closed), and projection of the projected image is stopped. The shutter control section 42, which has received the correction start signal, sends a pick-up start signal to the pick-up section 13 for correction. At the pick-up section 13 for correction which has received this signal, after a fixed period of time elapses, the image for adjustment of one of the left eye and the right eye displayed on the image display section 12 is picked-up (e.g., the image for adjustment for the left eye is picked-up). When pick-up is completed, a pick-up completion signal is generated at the pick-up section 13 for correction, and this signal is sent to the shutter control section 42. At the shutter control section 42 which has received the pick-up completion signal, of the plurality of the first shutter sections 41-1, 41-2, the shutter section 41-2 for of the right eye which has been closed until now is opened, and the shutter section 41-1 for the left eye which has been open is closed. Projection of the image for the right eye, for which projection has been stopped, is started again, and projection of the image for the left eye, for which image projection had been carried out until then, is stopped. At the same time, the shutter control section 42 sends a pick-up start signal to the pick-up section 13 for correction. After a fixed period of time passes, the pick-up section 13 for correction, which has received this signal, picks-up the image for correction which is displayed on the image display section 12.

After pick-up has been completed, a signal giving notice that pick-up has been completed is generated from the pick-up section 13 for correction, and is sent to the shutter control section 42. The shutter control section 42, which has received this signal, returns the operation of the shutter to the operation at the time of normal image viewing. Further, simultaneously with the completion of pick-up, the picked-up image data is sent to the correction computation section 14. Here, computation based on the image data is carried out, and correction data for geometric distortion and positional offset is determined. The correction data is sent to the correction processing section 15 where, on the basis of this correction data, correction processing is carried out on the left and right image signals (or one of the image signals) from a signal source (not shown). The image signals which have been subjected to correction processing are sent to the image projecting sections 11-1, 11-2, and images, whose geometric distortion and positional offset have been corrected, are displayed on the image display section 12. The opening and closing timing of the left eye portion and the right eye portion of the image viewing section 44 is made to match the opening and closing timing of the first shutter sections 41-1, 41-2 for the left and right eyes. Thus, the two-dimensional images for the left eye and the right eye which are displayed on the image display section 12 are divided so as to be able to be viewed by the left eye and the right eye respectively.

In accordance with the above method, the geometric distortion and positional offset of the plurality of images which are superposed in order to view a stereoscopic image can be corrected electrically and automatically without mechanical fine adjustment. As a result, a stereoscopic image without geometric distortion and positional offset on the image display section 12 can be viewed by the image viewing section 44.

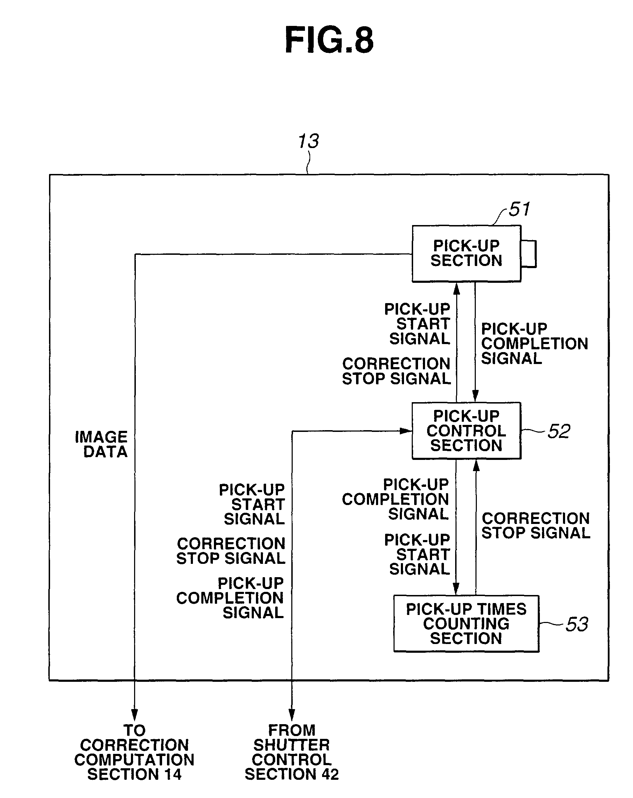

Fig. 8 shows a structural example of the pick-up section 13 for correction in the above-described third embodiment.

The pick-up section 13 for correction is structured so as to include a pick-up section 51, a pick-up control section 52, and a pick-up times counting section 53.

The pick-up section 51 carries out pick-up of an image for correction, and temporarily accumulates the image data. The pick-up control section 52 controls the pick-up section 51.

The pick-up times counting section 53 senses completion of pick-up of the data for correction, and counts the number of times that pick-up takes place. When the number of times that pick-up is carried out reaches a given number, acquisition of data for correction is completed, and pick-up operation of the pick-up section 51 is stopped.

The operation and effects of the third embodiment employing the structure of Fig. 8 will be explained.

First, images for adjustment are projected onto the image display section 12 by the image projecting sections for the left eye and the right eye, and the image projecting sections 11-1, 11-2 are disposed such that the images for the left eye and the right eye are substantially superposed on each other. By turning a switch (not shown) of the correction start signal generating section 43 on, a correction start signal is generated, and the correction start signal is sent to the shutter control section 42. When the correction start signal is received at the shutter control section 42, only one of the plurality of first shutter sections 41-1, 41-2 for the left eye and the right eye is closed (e.g., the shutter section 41-2 for the right eye is closed), and projection of the projected image is stopped. Thereafter, a pick-up start signal is sent from the shutter control section 42 to the pick-up control section 52 in the pick-up section 13 for correction. After a fixed period of time elapses, the pick-up control section 52 which has received the pick-up start signal sends the pick-up start signal to the pick-up section 51. The one image for adjustment displayed on the image display section 12 (e.g., the image for adjustment for the left eye) is picked-up at the pick-up section 51 which has received the pick-up start signal. When pick-up is completed, a pick-up completion signal is generated at the pick-up section 51, and this pick-up completion signal is sent to the shutter control section 42 and to the pick-up times counting section 53 via the pick-up control section 52. At the pick-up times counting section 53 , thepick-up times value is incremented by 1. At the shutter control section 42 which has received the pick-up completion signal, of the plurality of the first shutter sections 41-1, 41-2, the shutter section 41-2 for the right eye which had been closed until then is opened, and the shutter section 41-1 for the left eye which has been open is closed. Projection of the image for adjustment for the right eye, for which projection has been stopped, is started again, and projection for the left eye, for which image projection had been carried out until then, is stopped. At the same time, the shutter control section 42 sends a pick-up start signal to the pick-up control section 52. After a fixed period of time passes, the pick-up control section 52, which has received this pick-up start signal, sends the pick-up start signal to the pick-up section 51. The pick-up section 51 which has received the pick-up start signal picks-up the image for adjustment for the right eye which is displayed on the image display section 12.

After pick-up has been completed, the pick-up section 51 generates a signal giving notice that pick-up has been completed, and this pick-up completion signal is sent, via the pick-up control section 52, to the shutter control section 42 and the pick-up times counting section 53. Here, the pick-up times value is incremented by 1. When the pick-up times value has reached a pick-up times value which is set in advance, the pick-up times counting section 53 generates a correction stop signal, and sends the correction stop signal to the pick-up control section 52, and pick-up stops. If the pick-up times value has not reached the pick-up times value which is set in advance, the series of processes, from the process after arrangement of the image projecting sections, is repeated until the pick-up times value reaches the pre-set number of pick-up times. Further, the correction stop signal is sent from the pick-up control section 52 to the shutter control section 42. At the shutter control section 42 which has received the correction stop signal, operation of the first shutter sections 41-1, 41-2 is returned to operation at the time of normal image viewing (i.e., alternate, high-speed switching operation).

The pick-up control section 52, which has received the correction stop signal, sends the correction stop signal to the pick-up section 51 as well. The pick-up section 51 sends to the correction computation section 14 all of the image data which was picked-up from the time the correction start signal was received to the time the correction stop signal was received at the pick-up section 15.

The correction computation section 14 carries out computation on the basis of the image data sent thereto, and generates correction data for geometric distortion and positional offset. This correction data is sent to the correction processing section 15 where, on the basis of the correction data, correction processing is carried out on the image signals for the left eye and the right eye (or one of the image signals) from a signal source which is not shown. The image signals which have been subjected to correction processing are sent to the image projecting sections 11-1, 11-2, and images for which geometric distortion and positional offset have been corrected are displayed on the image display section 12.

By making the opening and closing timings at the first shutter sections 41-1, 41-2 for the left eye and the right eye coincide, the two-dimensional images for the left eye and the right eye which are displayed on the image display section 12 are divided for the left eye and the right eye and viewed at the left eye portion and the right eye portion of the image viewing section 44.

In accordance with the above method, the positional offset and geometric distortion of the plurality of images which are superposed in order to view a stereoscopic image can be corrected electrically and automatically without mechanical fine adjustment. As a result, a stereoscopic image without positional offset and geometric distortion on the image display section 12 can be viewed by the image viewing section 44.

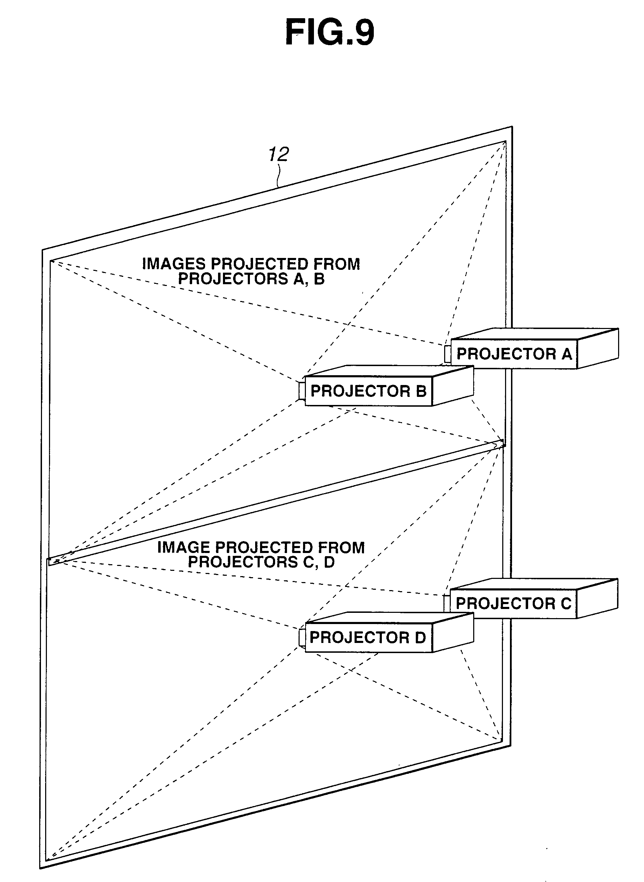

The above-described embodiment presupposes use of one projector for each of the left eye and the right eye. However, in the present invention, two or more projectors may be used for each of the left eye and the right eye. As an example, the system shown in Fig. 9 in which two projectors are used for each of the left eye and the right eye will be described. In Fig. 9, by using four projectors, the image display area is about twice that in a case in which two projectors are used.

In Fig. 9, the projected images projected from projectors A, B for the left eye and right eye are projected onto the upper half of the screen of the image display section 12. The projected images projected from projectors C, D for the left eye and right eye are projected onto the lower half of the screen of the image display section 12. Accordingly, in the case of Fig. 9 as well, in the same way as in the first through third embodiments, for the top two projectors A, B among the four projectors, first, an image for correction projected onto the image display section 12 from the projector A for the left eye for example is picked-up at a pick-up section for correction which is disposed in front of the image display section 12, and the image data is obtained. For the projector B for the right eye as well, similarly, the image for correction projected onto the image display section 12 from the projector B is picked-up at a pick-up section for correction, and the image data is obtained. The same is carried out for the lower two projectors C, D, and the respective image data are obtained. Then, these image data are sent to the correction computation section 14, and correction data for correcting configurational distortion such as geometric distortion or positional offset or the like is generated and sent to the correction processing section 15. At the correction processing section 15, on the basis of the correction data, correction processing is carried out on the two sets (the upper set and the lower set) of image signals supplied to the four projectors, wherein a left image signal and a right image signal are one set of image signals. In this way, configurational distortion, such as geometric distortion or positional offset can be corrected.

Alternatively, in the case of Fig. 9, the images for correction, which are projected onto the image display section 12 from, for example, the two projectors A, C for the left eye among the four projectors, are picked-up at pick-up sections for correction disposed at the front of the image display section 12, and the image data is obtained. Further, for the two projectors B, D for the right eye as well, the images for correction projected onto the image display section 12 form the two projectors B, D are picked-up at pick-up sections for correction, and the image data is obtained. Then, these image data are sent to the correction computation section 14 where correction data for correction of configurational distortion such as geometric distortion or positional offset or the like is prepared and is sent to the correction processing section 15. At the correction processing section 15, on the basis of the correction data, correction processing is carried out on the two sets (upper set and lower set) of image signals supplied to the four projectors, wherein a left image signal and a right image signal are one set. The configurational distortion, such as geometric distortion or positional offset or the like, can thereby be corrected.

In Fig. 9, the upper and lower projected images are projected such that the upper and lower adjacent portions thereof overlap on the image display section 12. By providing such an overlapping portion, the border between the upper and lower images can be made unnoticeable, as compared with a case in which such an overlapping portion is not provided. However, when there is an overlapping portion, the brightnesses of the two images are added together such that this portion becomes light, and a type of non-uniformity of luminance occurs. Such non-uniformity of luminance can be corrected by the method which will be described hereinafter.

Further, even if the upper and lower projected images are disposed on the screen such that no overlapping portion exists, it is possible to carry out correction of non-uniformity of luminance and correction of non-uniformity of color at the correction computation section and the correction processing section, on the basis of the respective image data obtained by pick-up.

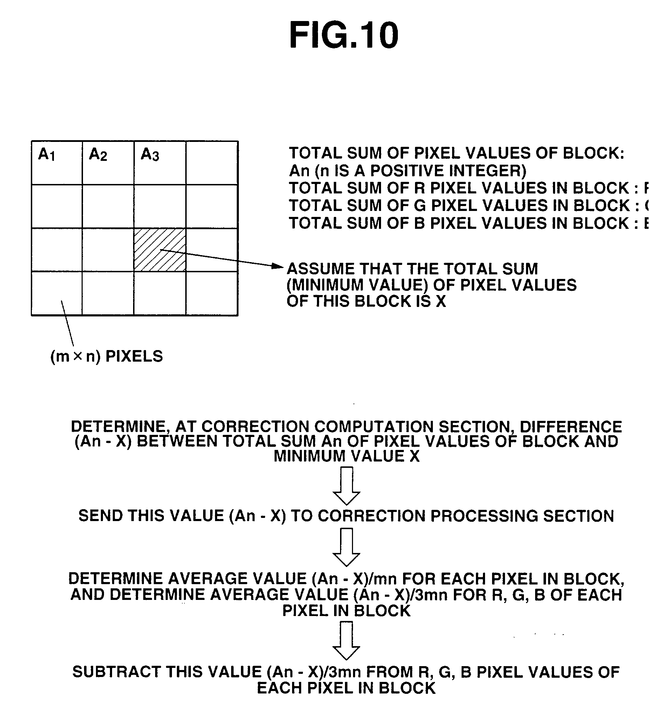

Next, an example of a method for correcting non-uniformity of luminance will be described with reference to Fig. 10.

First, at the correction computation section, the entire display range is divided into plural blocks, with one unit block being n pixels X m pixels (wherein n and m are positive integers). The total sum of the pixel values of each primary color of all of the pixels within a block is determined from the image data obtained by pick-up. Namely, the sum obtained by adding, for the plurality of pixels of each color of R, G, B contained within a block, the total sum of the pixel values for each R, the total sum of the pixel values for each G, and the total sum of the pixel values for each B, is the total sum (i.e., brightness) of the pixel values of that block. The difference between the total sum (minimum value) X of the pixel values of the block which is the darkest and the total sum An (n means the nth block) of the pixel values in a block is determined for each block, and this difference information is sent to the correction processing section. On the basis of the difference information which has been sent thereto, the correction processing section carries out correction processing by, for each block, lowering the pixel values within the block and making the total sum An of the pixel values within the block coincide with the total sum X of the pixel values of the darkest block. Specifically, the average value (An-X)/3mn for the pixels of each of R, G, B within a block is determined, and correction is carried out by subtracting this value from the pixel values of R, G, B for each pixel. It is thereby possible to correct the non-uniformity of luminance.

Similarly, in the case of correction of non-uniformity of color as well, the above-described correction processing is carried out for each primary color. In this case, the image of each of the primary colors is displayed and picked-up, and the same correction as above is carried out for each color.

In this way, it is possible to view a more ideal stereoscopic image in which not only geometric distortion and positional offset of the image have been eliminated, but also non-uniformity of luminance and non-uniformity of color have been eliminated.

The above-described embodiment uses a method in which the image data, which is picked-up after a correction start signal is generated at the pick-up section for correction, is temporarily stored, and on the basis of a correction stop signal, the image data is sent to the correction computation section. However, the timing for sending the image data from the pick-up section for correction to the correction computation section may be different. For example, a method may be used in which, when one pick-up is completed, the pick-up section for correction immediately sends the image data obtained by pick-up to the correction computation section, and the correction data obtained by the results of computation at the correction computation section is temporarily stored. Or, a method may be used in which image data is temporarily stored until a fixed number of pick-ups at the pick-up section for correction, and when the determined number of pick-ups have been completed, the image data is sent to the correction computation section.

Further, by providing a focal point automatic adjusting function within the image viewing section formed by spectacles or the like, it is possible to prevent the viewer's eyes from becoming fatigued when viewing the stereoscopic image. This is because, originally, in the case of three-dimensional (stereoscopic) viewing, there is the need to address the phenomenon of the focal position (distance) of the person's eyes changing in the viewing direction (because the depth differs in accordance with the direction).

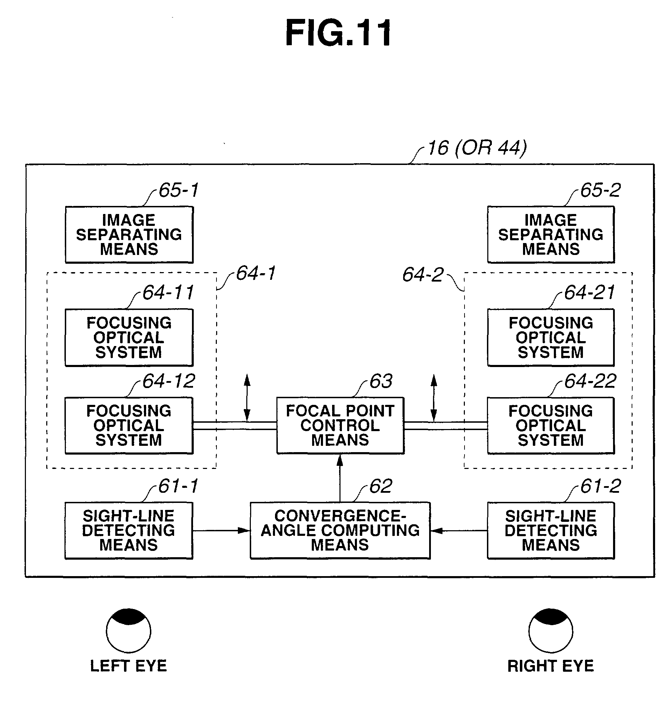

Fig. 11 is a structural example in which a focal point automatic adjusting function is provided in the image viewing section.

In Fig. 11, the image viewing section 16 (or 44) is structured so as to include two sight-line detecting means 61-1, 61-2 for the left eye and right eye which detect the sight-line directions, a convergence-angle computing section 62 which computes the angle between the sight-lines (called the convergence-angle) from the two sight-line directions of the sight-line detecting means 61-1, 61-2, a focal point control means 63 for controlling operation of the focal point adjusting mechanism on the basis of the computed convergence-angle, two focusing systems 64-1, 64-2 including focusing optical systems 64-12, 64-22 which are moved forward and backward by the focal point control means 63 in order to adjust the focal point, and image separating means 65-1, 65-2 which is disposed at the front of each of the focusing systems 64-1, 64-2, divide and input the respective image lights for the left eye and the right eye which are incident from the image display section.

Each of the focusing systems 64-1, 64-2 is formed by a plurality of focusing optical lens systems. The focusing system 64-1 includes a fixed focusing optical system 64-11, and a focusing optical system 64-12 which is movable forward and backward by control of the focal point control means 63. Similarly, the focusing system 64-2 includes a fixed focusing optical system 64-21, and a focusing optical system 64-22 which is movable forward and backward by control of the focal point control means 63.

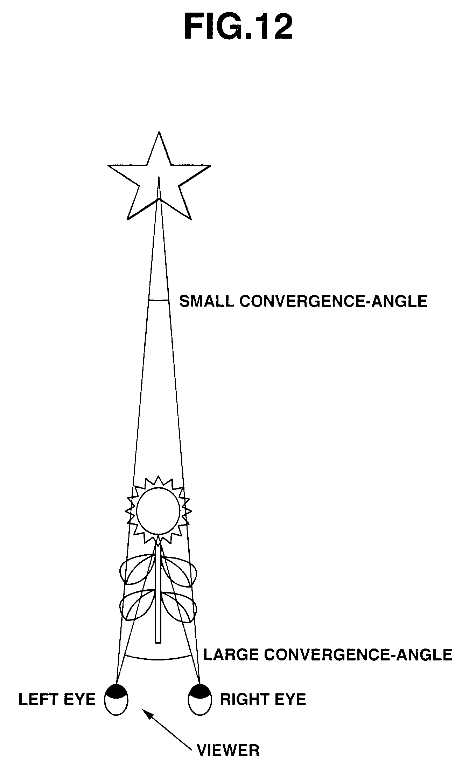

In this structure, the means 61-1, 61-2 for detecting the sight-lines of the left eye and the right eye of a person are provided in the image viewing section 16. Thus, due to the convergence-angle detecting section 62 detecting the angle between the two detected sight-lines of the left eye and the right eye, i.e., the convergence-angle (see Fig. 12), the position of regard in the depthwise direction can be determined, and appropriate adjustment of the focal point position which suits that distance can be carried out in real time. In this way, focus adjustment at the image viewing section 16 can be carried out automatically in accordance with the distance to the viewed region, and thus, fatigue of the eyes of the viewer can be lessened.

In addition to the above-described embodiment, a structure such as follows using four or more projectors is also possible.

### [Fourth Embodiment]

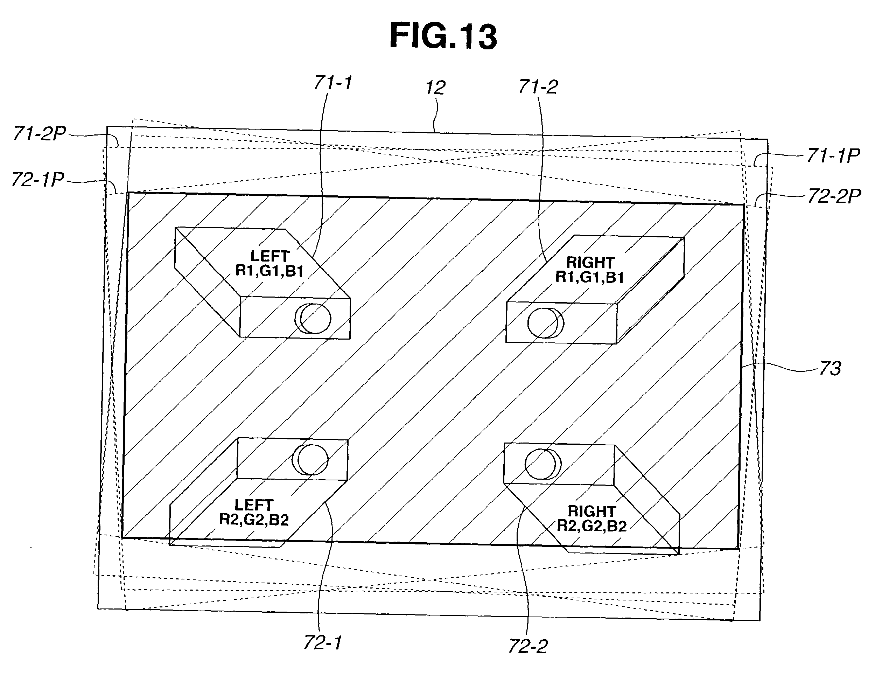

Fig. 13 is a diagram which schematically illustrates the structure of a stereoscopic image projection device of the fourth embodiment of the present invention. In the present embodiment, the image projecting means displays a projected image for one eye. Thus, by using a plurality of projectors which emit light of the three primary colors having different wavelength bands, image display with a larger number of primary colors than the usual three primary colors is possible.

For example, in order to display an image for one eye, two projectors are used, such that a total of four projectors are used. The color filters of two projectors for one eye cover different wavelength bands. When the projected images from the two projectors are superposed, an image of six primary colors can be displayed.

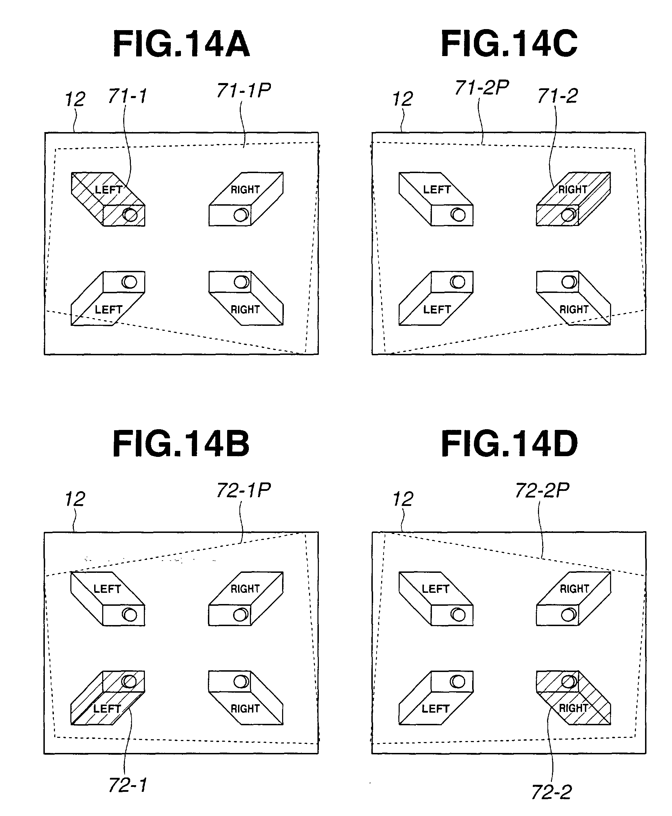

Fig. 13 illustrates an example of an arrangement of projectors at the time when one three-dimensional image is displayed by using a total of four projectors, which are two projectors for the left eye and two projectors for the right eye. Fig. 13 shows a case in which four projectors 71-1, 72-1, 71-2, 72-2 are disposed at the rear surface of the image display section 12 which is a screen or the like, and image viewing is possible from the front surface (the side toward the front in the direction perpendicular to the surface of the paper of Fig. 13). Dashed line frames 71-1P, 72-1P, 71-2P, 72-2P represent image projecting regions of the projectors 71-1, 72-1, 71-2, 72-2. Figs. 14A, 14B, 14C, 14D show the respective image projecting regions 71-1P, 72-1P, 71-2P, 72-2P in cases in which images are projected independently from the projectors 71-1, 72-1, 71-2, 72-2. (The hatching shows the projector that is projecting.)

The upper and lower projectors 71-1, 72-1 are used as projectors for the left eye, and the upper and lower projectors 71-2, 72-2 are used as projectors for the right eye. The projector 71-1 for the left eye has three primary colors of R1, G1, B1. The projector 72-1 for the left eye has three primary colors R2, G2, B2 of wavelengths which are different from those of R1, G1, B1 of the aforementioned projector 71-1 for the left eye. Similarly, the projector 71-2 for the right eye has three primary colors of R1, G1, B1. The projector 72-2 for the right eye has three primary colors R2, G2, B2 of wavelengths which are different from those of R1, G1, B1 of the aforementioned projector 71-2 for the right eye.

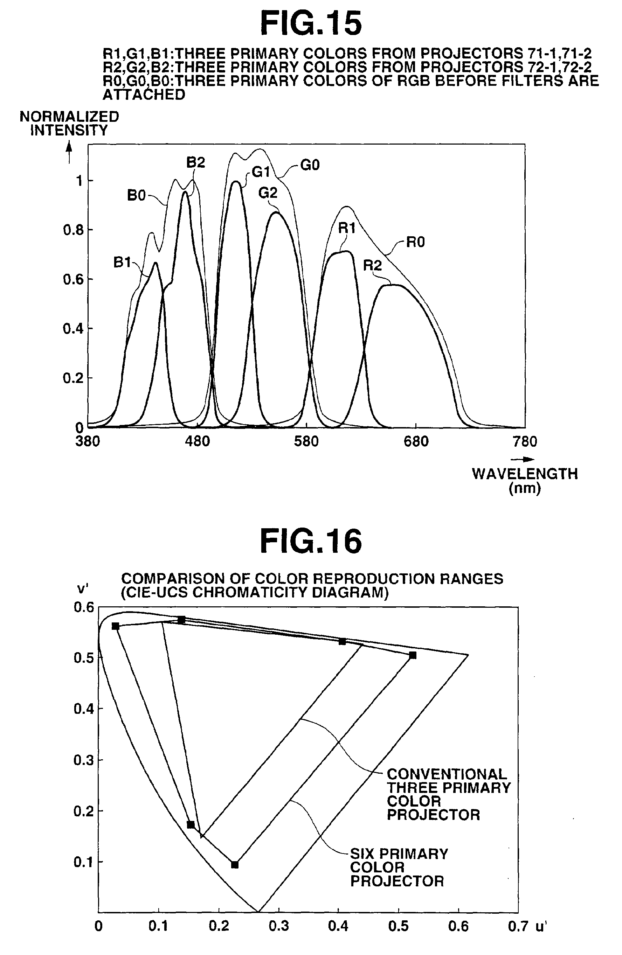

The wavelength bands covering the six primary colors which are the primary colors of R1, G1, B1 and the primary colors of R2, G2, B2 are as in Fig. 15 for example.

In Fig. 15, the three primary colors RGB before attachment of filters mean the RGB light sources (RGB light obtained by spectral division of light from a white light source) which are provided as an original function of the projector for use as the three primary colors of each projector.

In the present embodiment, RGB color filters (filters having wavelength bands of R1, G1, B1, and filters having wavelength bands of R2, G2, 82), which have narrower wavelengths, are attached to the original RGB light sources.

Specifically, a narrow band color filter (bandpass filter) is disposed at a position in front of the section at which the three colors are merged by a prism or the like, on the optical path of each of the primary color lights of R, G, B within each projector, such that the wavelengths alternate. In this way, the wavelength bands of R1, G1, B1 and the wavelength bands of R2, G2, B2 alternate. Or, in a case in which the filters are disposed at the projection opening of each projector, the RGB lights have already been merged by a prism or the like, and thus, filters having comb-like spectral characteristics are used. In this way, by disposing filters of alternating wavelength bands, a color reproduction range such as that shown in Fig. 16 can be obtained. The chromaticity diagram of Fig. 16 shows the color reproduction range in comparison with that of a conventional projector.

By narrowing the wavelength bands of the primary colors as described above, the positions of the primary colors within the chromaticity diagram approach the outer sides.

Namely, this is based on the following basic line of thought: if the primary color points can be set to be at positions as close as possible to the outer sides in the chromaticity diagram of Fig. 16 and the number of primary colors can be increased, the inner side of the configuration formed by a line connecting the respective primary color points is the range of the color which can be expressed at the display device. Thus, the color reproduction range can be broadened.

As shown in Fig. 16, the color reproduction range in a case in which projected images are displayed by using the six primary color projectors is much more broad than a case in which conventional three primary color projectors are used.

In Fig. 13 or Fig. 14, the reason why the dashed line frames 71-1P, 72-1P, 71-2P, 72-2P representing the image projecting regions of the projectors 71-1, 72-1, 71-2, 72-2 are trapezoidal shapes of respectively different arrangements is that the image regions projected by the projectors 71-1, 72-1, 71-2, 72-2 are distorted differently from one another. In Fig. 13, a bold, solid line 73 (the hatched portion) represents the largest rectangle which can be formed within a region in which images 71-1P, 72-1P, 71-2P, 72-2P from the four projectors 71-1, 72-1, 71-2, 72-2 are superposed. The size thereof is the largest region in which a three-dimensional image of six primary colors can be displayed. Accordingly, by making the size (range) of the image display section 12, such as a screen or the like, the portion of the bold, solid line frame 73, superposed images without positional offset can be obtained.

As explained with reference to Fig. 1, generally, even in a state in which there is positional offset, images are picked-up at the pick-up section 13, and the amount of positional offset is determined at the correction computation section 14 from the picked-up image data, and the image signals can be electrically corrected at the correction processing section 15 such that the positional offset is eliminated.

In Fig. 13, an example is illustrated in which one projector can display three primary colors, and a single image is displayed in six primary colors by using two projectors. However, in the present invention, the number of primary colors per projectors is not limited to three, and the number of primary colors per image is not limited to six. For example, each projector may have four primary colors, and by using three of such projectors, one image (for one eye) can be displayed in 12 primary colors.

The methods of correction of positional offset and geometric distortion are carried out by methods which are the same as those of the above-described embodiments.

In this way, a three-dimensional image can be displayed in colors which are close to those of the actual subject.

As described above, in accordance with the present invention, it is possible to electrically correct, without mechanical fine adjustment, image distortion such as positional offset or geometric distortion of a plurality of images for one eye and another eye which are superposed in order to obtain a stereoscopic image. As a result, a stereoscopic image projection device which can achieve a proper stereoscopic effect can be provided.

Note that the present invention is not limited to the above-described embodiments, and various modified embodiments are possible within a scope which does not deviate from the gist of the invention.

## Claims

1. A stereoscopic image projection device comprising:
a plurality of image projecting means which, on the basis of image signals for one eye and another eye, project images for the one eye and the other eye which have parallax;
image display means for displaying the images projected from the plurality of image projecting means;
viewing means for dividing and enabling viewing, at the one eye and at the other eye respectively, of two-dimensional images for the one eye and the other eye which are displayed on the image display means; and
correction processing means for carrying out correction processing on at least one of image signals for the one eye and the other eye, on the basis of an amount of correction of image distortion determined on the basis of the image displayed on the image display means.

2. A stereoscopic image projection device according to claim 1, further comprising:
pick-up means for correction for picking-up an image projected on the image display means, for correction; and
correction computing means for determining, by computation, an amount of correction of image distortion from picked-up image data,
wherein the correction processing means carries out correction processing on image signals for the one eye and the other eye or on an image signal for one of the one eye and the other eye, on the basis of the amount of correction determined by the correction computing means.

3. A stereoscopic image projection device according to claim 2, further comprising:
a plurality of first polarizing means through which passes only light of a given polarization direction for each eye from image lights for the one eye and the other eye which are projected from the plurality of image projecting means,
wherein, by using polarized light, the viewing means divides and enables viewing, at the one eye and at the other eye respectively, two-dimensional images for the one eye and the other eye which are displayed on the image display means.

4. A stereoscopic image projection device according to claim 3, wherein the pick-up means for correction includes:
pick-up means having functions of carrying out pick-up of an image for correction and temporarily accumulating image data;
a second polarizing means through which only light of a given polarization direction passes;
rotating means for automatically rotating the second polarizing means a predetermined angle;
rotation control means for controlling of the rotating means; and
pick-up times counting means for sensing completion of pick-up of the image for correction, counting a number of times pick-up is carried out, and stopping pick-up by the pick-up means when the number of times pick-up is carried out has reached a given number of times.

5. A stereoscopic image projection device according to claim 2, further comprising:
a plurality of first shutter means for repeatedly carrying out, at high speed, operations of allowing passage of and blocking passage of image lights for the one eye and the other eye which are projected from the plurality of image projecting means;
shutter controlling means for controlling operations of the plurality of first shutter means and the pick-up means for correction; and
correction start signal generating means for generating a correction start signal, and for making the shutter control means and the pick-up means for correction start operations for correction.

6. A stereoscopic image projection device according to claim 5, wherein the image viewing means has a plurality of second shutter means for the one eye and the other eye which repeatedly open and close at high speed synchronously with the plurality of first shutter means for the one eye and the other eye.

7. A stereoscopic image projection device according to claim 5, wherein the pick-up means for correction includes:
pick-up means having functions of carrying out pick-up of an image for correction and temporarily accumulating image data;
pick-up control means for controlling the pick-up means; and
pick-up times counting means for sensing completion of pick-up of the image for correction, counting a number of times pick-up is carried out, and stopping pick-up by the pick-up means when the number of times pick-up is carried out has reached a given number of times.

8. A stereoscopic image projection device according to claim 1, wherein the image projecting means carries out image display with a number of primary colors which is greater than a usual number of three primary colors, by the image projecting means utilizing plural devices which emit lights of primary colors having different wavelength bands, in order to display an image for one eye.

9. A correction amount computing device of a stereoscopic image projection device having:
a plurality of image projecting means which, on the basis of image signals for one eye and another eye, project images for the one eye and the other eye which have parallax;
image display means for displaying the images projected from the plurality of image projecting means;
viewing means for dividing and enabling viewing, at the one eye and at the other eye respectively, two-dimensional images for the one eye and the other eye which are displayed on the image display means; and
correction processing means for carrying out correction processing on at least one of image signals for the one eye and the other eye, on the basis of an amount of correction of image distortion determined on the basis of the image displayed on the image display means,
wherein the correction amount computing device of a stereoscopic image projection device comprises:
pick-up means for correction for picking-up an image projected on the image display means, for correction; and
correction computing means for computing a correction amount for correcting image distortion from picked-up image data, and outputting the correction amount to the correction processing means.

10. A correction amount computing device of a stereoscopic image projection device according to claim 9, further comprising:
a plurality of polarizing means through which passes only light of a given polarization direction for each eye from image lights for the one eye and the other eye which are projected from the plurality of image projecting means,
wherein, by using polarized light, the viewing means divides and enables viewing, at the one eye and at the other eye respectively, two-dimensional images for the one eye and the other eye which are displayed on the image display means.

11. A correction amount computing device of a stereoscopic image projection device according to claim 9, furthercomprising:
a plurality of shutter means for repeatedly carrying out, at high speed, operations of allowing passage of and blocking passage of image lights for the one eye and the other eye which are projected from the plurality of image projecting means;
shutter controlling means for controlling operations of the plurality of shutter means and the pick-up means for correction; and
correction start signal generating means for generating a correction start signal, and for making the shutter controlling means and the pick-up means for correction start operations for correction.

12. Acorrection amount computing device of a stereoscopic image projection device according to claim 9, wherein the image projecting means carries out image display with a number of primary colors which is greater than a usual number of three primary colors, by the image projecting means utilizing plural devices which emit lights of primary colors having different wavelength bands, in order to display an image for one eye.
